# EUROPÄISCHE PATENTSCHRIFT

(11) **EP 1 465 324 B1**
(45) Veröffentlichungstag und Bekanntmachung des Hinweises auf die Patenterteilung: **27.12.2006**
(21) Anmeldenummer: 03007701.0
(22) Anmeldetag: 03.04.2003
(51) Int. Cl.: H02K 7/118

(54) **Elektromotor mit Rücklaufsperre**
Electric motor with reverse preventing mechanism
Moteur électrique avec dispositif anti-retour

(43) Veröffentlichungstag der Anmeldung: 06.10.2004
(73) Patentinhaber: SIEMENS AKTIENGESELLSCHAFT, 80333 München (DE)
(72) Erfinder: Bruschke, Rolf-Eberhard, 01239 Dresden (DE); Jakubec, Ralph, 01705 Freital (DE); Maschke, Norbert, 01307 Dresden (DE); Rieger, Thomas, 93057 Regensburg (DE)

(56) Entgegenhaltungen:
- FR-A- 1 075 390
- FR-A- 1 128 339
- FR-A- 1 460 560
- GB-A- 1 545 100
- US-A- 3 416 014

## Beschreibung

Die Erfindung betrifft ein Elektrisches Gerät, das einen Elektromotor, insbesondere einen Einphasen-Synchronmotor, mit einer Rücklaufsperre umfasst. Ein derartiger Motor ist beispielsweise aus der DE 32 25 435 A1 bekannt.

Der aus der DE 32 25 435 A1 bekannte Elektromotor weist eine Rücklaufsperre innerhalb des Motorgehäuses auf. Die Rücklaufsperre wird gebildet aus einem sich mit der Motorwelle drehenden Exzenterelement und einem bezüglich des Exzenterelementes zwangsgeführten Sperrorgan, wobei sowohl das Exzenterelement als auch das Sperrorgan Anschlags- bzw. Gegenanschlagflächen aufweisen, durch welche die ansonsten unbestimmte Drehrichtung des als Einphasen-Synchronmotor ausgebildeten Elektromotors festgelegt ist. Die gesamte Rücklaufsperre ist innerhalb eines Lagerdeckels des Motors angeordnet. Die Motorkonstruktion muss somit insgesamt der Rücklaufsicherungsfunktion angepasst sein.

Der Erfindung liegt die Aufgabe zugrunde, ein Elektrisches Gerät mit einem Elektromotor, insbesondere Einphasen-Synchronmotor, mit einer konstruktiv besonders einfach aufgebauten und einfach montierbaren Rücklaufsperre anzugeben.

Diese Aufgabe wird erfindungsgemäß gelöst durch ein Elektrisches Gerät mit den Merkmalen des Anspruchs 1. Hierbei ist außerhalb des Motorgehäuses des Elektromotors eine Montageplatte angeordnet, auf welcher ein bezüglich der Motorwelle axial unverschieblich und radial verschieblich geführtes Sperrorgan in einem Lagerelement geführt ist. Das Lagerelement ist vorzugsweise einstückig mit der Montageplatte, insbesondere aus Kunststoff, gefertigt. Mit dem Sperrorgan wirkt ein mit der Motorwelle umlaufendes Exzenterelement zusammen, welches vom Sperrorgan im Wesentlichen ringförmig umgeben wird. Das Exzenterelement sowie das Sperrorgan können, im Wesentlichen in der Ebene der normal zur Motorwelle angeordneten Montageplatte, auf der motorabgewandten oder auf der motorzugewandten Seite der Montageplatte angeordnet sein. Durch die Anordnung der Rücklaufsperre vollständig außerhalb des Motorgehäuses kann als elektromotorischer Antrieb ein Standardteil ohne Rücklaufsicherungsfunktion verwendet werden. Im Montageendzustand des Elektromotors mit Rücklaufsperre ist das verschiebliche Sperrorgan nicht mehr entnehmbar, d.h. unverlierbar gelagert, da es einerseits axial durch das Lagerelement auf der oder in der Montageplatte und andererseits radial durch die Motorwelle mit dem Exzenterelement gesichert ist.

Ist auf der Motorwelle ein Antriebsritzel angeordnet, so ist dies bevorzugt einstückig mit dem Exzenterelement, beispielsweise als Kunststoffteil, gefertigt. Um einen einfachen Zusammenbau des Elektromotors mit der Rücklaufsperre sowie eine einfache Demontage zu ermöglichen, ist der Außendurchmesser des Antriebsritzels vorzugsweise geringer als der Innendurchmesser des Sperrorgans. Die Montageplatte ist vorteilhafterweise auch zur Aufnahme zusätzlicher Funktionselemente, wie Achsen, Getriebe oder Stellelemente, sowie zur Befestigung von Gehäuseteilen vorgesehen. In konstruktiv besonders vorteilhafter Weise ist die Montageplatte zugleich ein Gehäuseteil. An die Montageplatte ist nach einer bevorzugten Ausgestaltung eine Gehäusegrundplatte einstückig angeformt, welche parallel zur Motorwelle angeordnet ist. Nach einer besonders vorteilhaften Weiterbildung sind die Montageplatte und die Gehäusegrundplatte Teile eines einstückigen, vorzugsweise als Kunststoffteil gefertigten Gehäusegrundkörpers, welcher bevorzugt direkt auf eine Hutschiene aufschnappbar ist.

Der Vorteil der Erfindung liegt insbesondere darin, dass eine Rücklaufsperre eines Elektromotors, insbesondere Einphasen-Synchronmotors, auf konstruktiv einfache Weise ein mit einem auf der Motorwelle mitlaufenden Exzenterelement zusammenwirkendes linear geführtes Sperrorgan aufweist, welches in einem auf einer außerhalb des Motorgehäuses positionierten multifunktionalen Montageplatte angeordneten Lagerelement axial fixiert und radial verschieblich gelagert ist.

Nachfolgend wird ein Ausführungsbeispiel der Erfindung anhand einer Zeichnung näher erläutert. Hierin zeigen jeweils in vereinfachter perspektivischer Darstellung:
- FIG 1: ein elektrisches Gerät mit einem Elektromotor mit Rücklaufsperre,
- FIG 2: ein Exzenterelement der Rücklaufsperre des Elektromotors nach FIG 1,
- FIG 3: ein Sperrorgan der Rücklaufsperre des Elektromotors nach FIG 1, und
- FIG 4: ein elektrisches Gerät mit einem Elektromotor mit Rücklaufsperre in einer alternativen Bauform
- FIG 5: das elektrische Gerät nach FIG 4 in einer Explosionsdarstellung in Vorderansicht, und
- FIG 6: das elektrische Gerät nach FIG 4 in einer Explosionsdarstellung in Rückansicht.

Einander entsprechende oder gleichwirkende Teile sind in allen Figuren mit den gleichen Bezugszeichen gekennzeichnet.

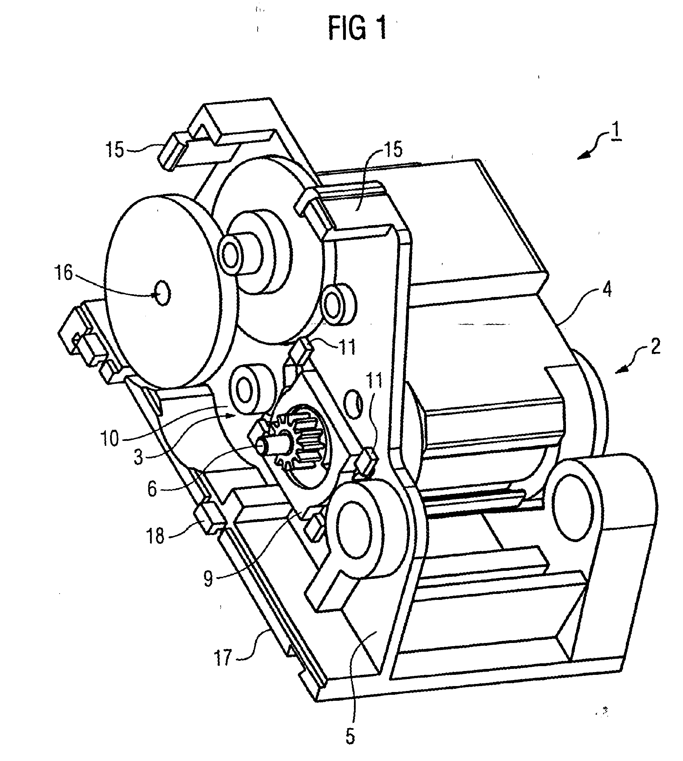

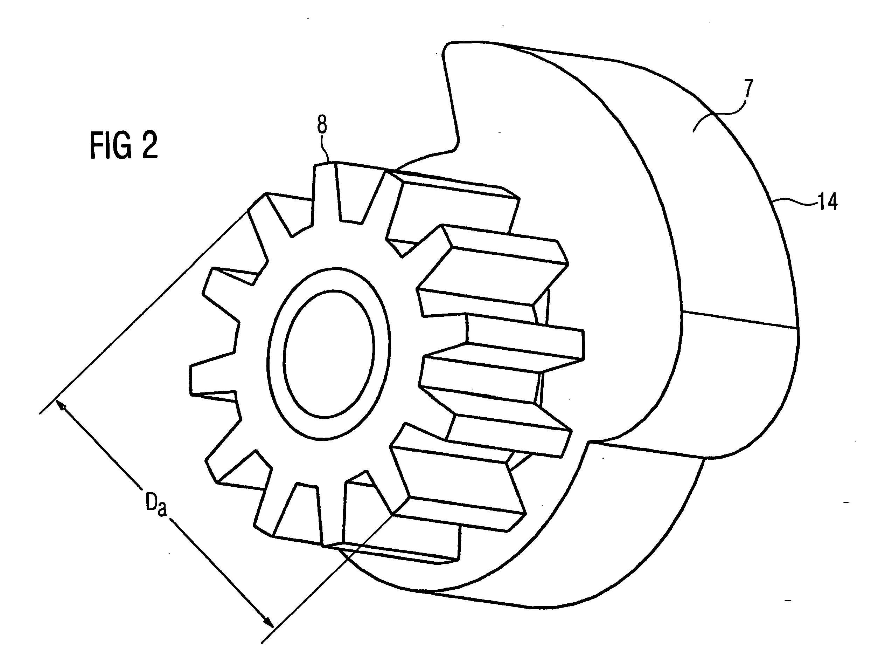

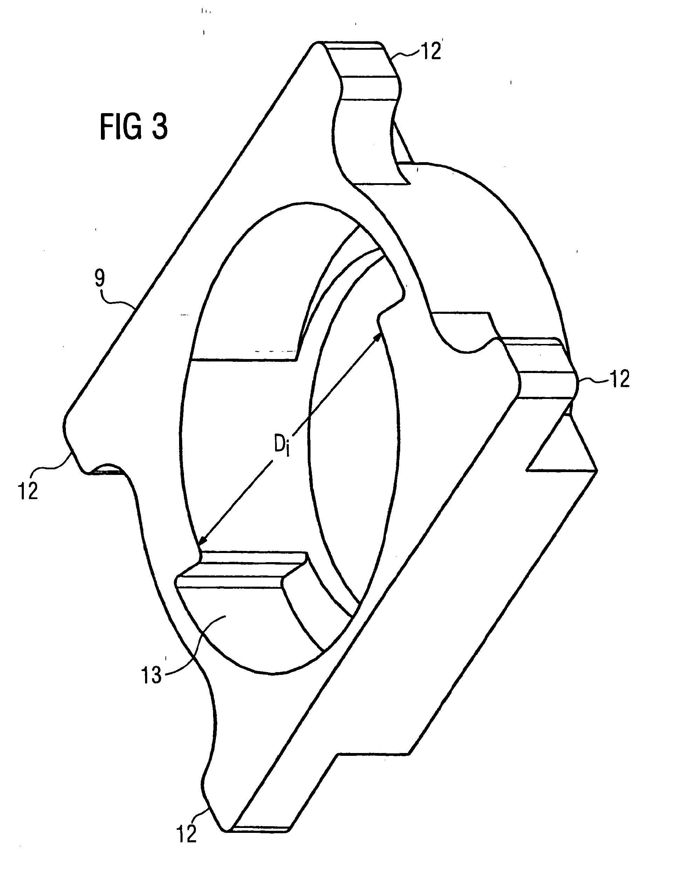

Die FIG 1 zeigt - ohne Gehäuse - ein elektrisches Gerät 1 mit einem Elektromotor 2 mit einer Rücklaufsperre 3, welches dem motorischen Antrieb eines Stellelementes eines nicht weiter dargestellten Schaltgerätes dient. Der Elektromotor 2 weist ein Motorgehäuse 4 auf, welches einer Montageplatte 5 benachbart ist. Die zwischen dem Elektromotor 2 und der Rücklaufsperre 3 angeordnete Montageplatte 5 wird von der Motorwelle 6 des Elektromotors 2 durchdrungen. Auf der Motorwelle 6 ist starr ein Exzenterelement 7 (FIG 2) befestigt, welches zusammen mit einem Antriebsritzel 8 ein integrales Bauteil, vorzugsweise aus Kunststoff, bildet. Das Exzenterelement 7 ist etwa ringförmig von einem Sperrorgan 9 (FIG 3) als linear beweglichem Teil der Rücklaufsperre 3 umgeben. Das Sperrorgan 9 ist mittels eines Lagerelementes 10, welches an der Montageplatte 5 befestigt ist oder einen Teil der als Kunststoffteil gefertigten Montageplatte 5 bildet und vier einzelne Lagerzungen 11 aufweist, auf der motorabgewandten Seite der Montageplatte 5 linear verschieblich geführt.

Die Anordnung der Rücklaufsperre 3 auf der motorabgewandten Seite der Montageplatte 5 ermöglicht eine sehr einfache visuelle Kontrolle des Montagezustands bei der Fertigung des Gerätes 1. Wie aus FIG 1 ferner ersichtlich ist, ist das Sperrorgan 9 unverlierbar mittels des Lagerelementes 10 an der Montageplatte 5 gehalten. Das Sperrorgan 9 weist eine Außenkontur mit einer im Wesentlichen quadratischen Grundform auf, wobei an den Ecken vier Zungen 12 angeordnet sind, die die Lagerzungen 11 hintergreifen und an der Montageplatte 5 anliegen. Das Sperrorgan 9 ist somit axial bezüglich der Motorwelle 6 unverschiebbar gelagert. Die radiale Beweglichkeit des Sperrorgans 9 ist durch das Exzenterelement 7 begrenzt. Das Sperrorgan 9 kann somit erst nach Demontage des Elektromotors 2 von der Montageplatte 5 abgenommen werden. Die Motorwelle 6 einschließlich des Exzenterelementes 7 und des Antriebsritzels 8 kann auf einfache Weise von der Montageplatte 5 entfernt werden, da der Außendurchmesser Dₐ des Antriebsritzels 8 geringer ist als der geringste Innendurchmesser Dᵢ des Sperrorgans 9.

Wie aus FIG 3 ersichtlich ist, weist das Sperrorgan 9 zwei im Querschnitt etwa sichelförmige Vertiefungen 13 auf, welche mit einem Sperrzahn 14 des Exzenterelementes 7 zusammenwirken. Durch diesen Sperrmechanismus der Rücklaufsperre 3 führt das Sperrorgan 9 beim Lauf des Elektromotors 2 eine leicht oszillierende Bewegung aus, welche den Motorlauf praktisch nicht beeinträchtigt. Ist das Exzenterelement 7 einstückig mit dem Antriebsritzel 8 und das Lagerelement 10 einstückig mit der Montageplatte 5 gefertigt, so wird für die Herstellung der Rücklaufsperre 3 nur ein einziges zusätzliches Teil, nämlich das Sperrorgan 9 benötigt. Die Rücklaufsperre 3 ist somit äußerst Material sparend und einfach montierbar aufgebaut.

Weitere Vorteile ergeben sich dadurch, dass die Montageplatte 5 zusätzliche Funktionen als wesentliches Strukturbauteil des Gerätes 1 erfüllt. So sind an die Montageplatte 5 einstückig mehrere im Wesentlichen als Haltezungen ausgebildete Gehäusebefestigungselemente 15 angeformt, an welchen ein nicht dargestellter Gehäusedeckel befestigbar ist. Des Weiteren sind mehrere Durchführungen 16, in der Darstellung verdeckt, zur Lagerung verschiedener Bauteile, innerhalb des Gerätes 1 vorgesehen. Die Montageplatte 5 ist ferner einstückig mit einer rechtwinklig zu dieser angeordneten Gehäusegrundplatte 17, welche sich über die gesamte axiale Ausdehnung der Motorwelle 6 und damit über praktisch die gesamte Breiteabgesehen von nicht dargestellten Gehäusedeckeln - des Gerätes 1 erstreckt, ausgebildet. Die Gehäusegrundplatte 17 weist Befestigungselemente 18 auf, welche der Befestigung, insbesondere Einrastung, des selben Gehäusedeckels wie die Gehäusebefestigungselemente 15 der Montageplatte 5 dienen. Die Gehäusegrundplatte 17 ist einer nicht dargestellten Montageschiene, auch als Hutschiene bezeichnet, zugewandt, auf welcher das Gerät 1 befestigbar ist.

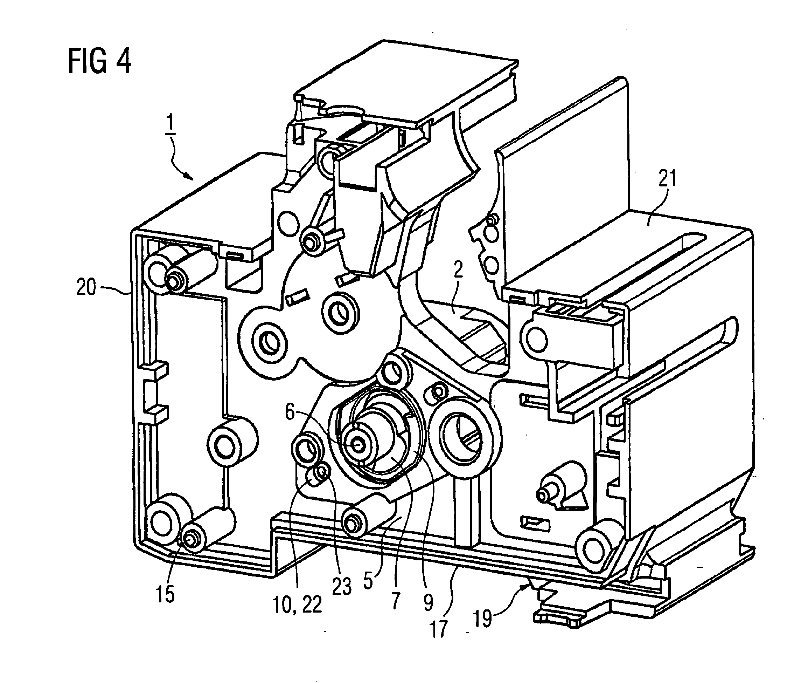

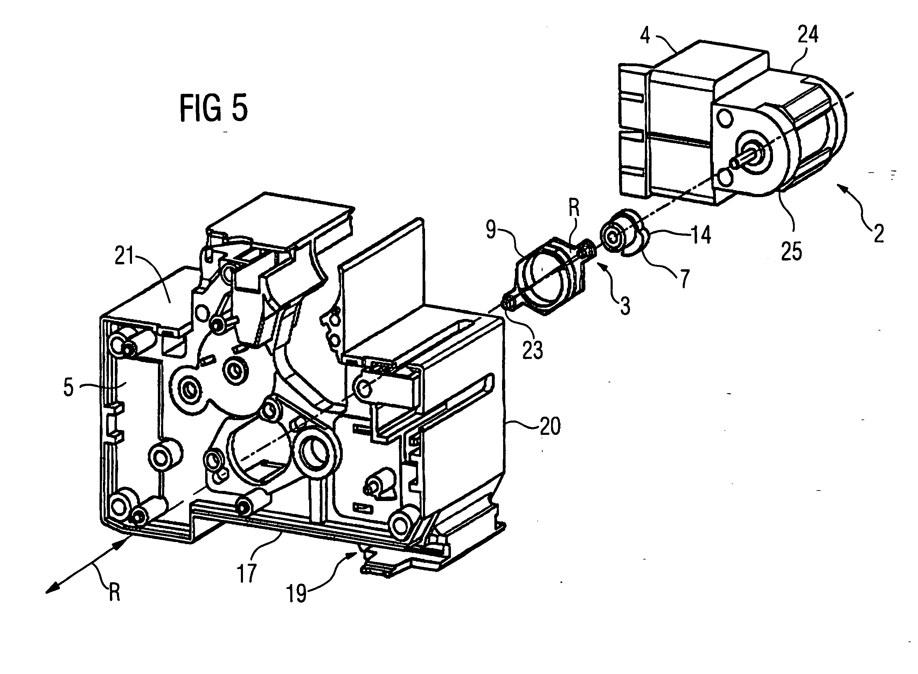

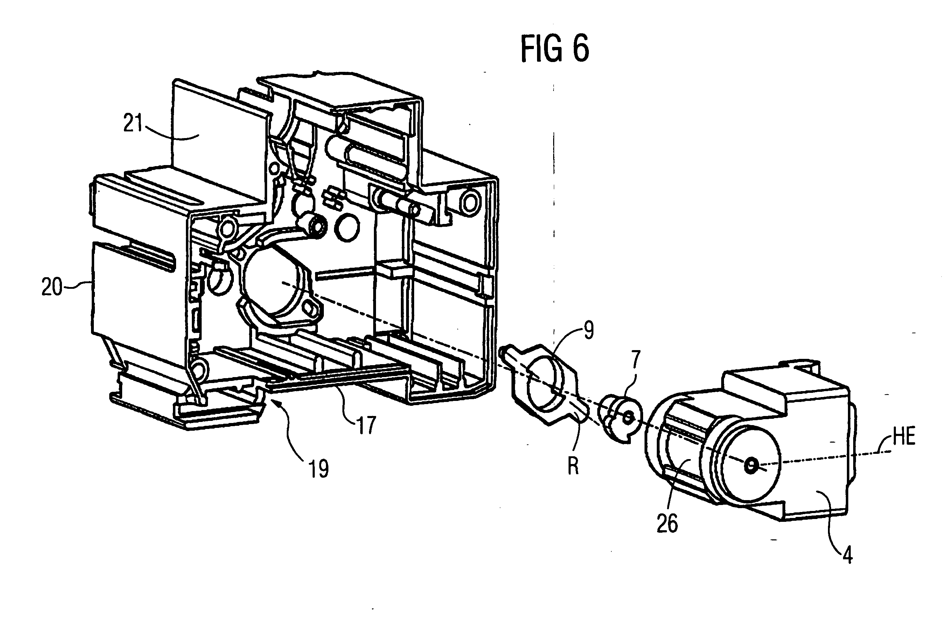

Die FIG 4 bis 6 zeigen eine alternative Ausführungsform eines Gerätes 1, welches mittels einer in den Darstellungen unten angeordneten Ansatzvorrichtung 19 auf einer Hutschiene aufrastbar ist. Die Ansatzvorrichtung 19 ist dabei einstückig mit der Gehäusegrundplatte 17 und somit auch einstückig mit der Montageplatte 5 ausgebildet. Die genannten Gehäuse- und Funktionsteile 5,17 bilden zusammen mit Gehäusewandungen 20 einen einteiligen, rationell herstellbaren Gehäusegrundkörper 21, welcher neben mit diesem verbindbaren nicht dargestellten Seitenteilen ein Hauptbauteil des Gehäuses des Gerätes 1 ist.

Abweichend vom Ausführungsbeispiel nach den FIG 1 bis 3 ist bei dem Gerät 1 nach den FIG 4 bis 6 das Sperrorgan 9 auf der motorzugewandten Seite der Montageplatte 5 angeordnet. Als Lagerelement 10 innerhalb der Montageplatte 5 dienen in diesem Fall zwei Schlitze 22, in denen jeweils ein Stift 23 des Sperrorgans 9 geführt ist. Die Oszillationsrichtung R, in welcher das Sperrorgan 9 beweglich ist, ist in Relation zur Hauptebene HE des Elektromotors 2, welche durch die Anordnung von dessen Statorpolen 24,25 gegeben und parallel zur Gehäusegrundplatte 17 ist, schräg gestellt, um auch bei mittels der Rücklaufsperre 3 gestopptem dauermagnetischem Läufer 26 ein zuverlässiges Anlaufen des Einphasen-Synchronmotors 2 zu gewährleisten.

## Patentansprüche

1. Elektrisches Gerät (1), das einen Elektromotor mit einem Motorgehäuse (4) und einer Rücklaufsperre (3) umfasst, welche ein mit der Motorwelle (6) umlaufendes Exzenterelement (7) sowie ein dieses im Wesentlichen ringförmig umgebendes zwangsgeführtes Sperrorgan (9) aufweist, **dadurch gekennzeichnet , dass** zur axial unverschieblichen und radial verschieblichen Führung des Sperrorgans (9) ein Lagerelement (10) vorgesehen ist, welches außerhalb des Motorgehäuses (4) auf oder in einer diesem benachbarten Montageplatte (5) angeordnet ist.

2. Elektrisches Gerät nach Anspruch 1, **dadurch gekennzeichnet, dass** auf der motorabgewandten Seite der Montageplatte (5) ein Antriebsritzel (8) auf der Motorwelle (6) angeordnet ist.

3. Elektrisches Gerät nach Anspruch 2, **dadurch gekennzeichnet, dass** das Exzenterelement (7) mit dem Antriebsritzel (8) einstückig ausgebildet ist.

4. Elektrisches Gerät nach Anspruch 2 oder 3, **dadurch gekennzeichnet , dass** der Außendurchmesser (Dₐ) des Antriebsritzels (8) geringer ist als der Innendurchmesser (Dᵢ) des Sperrorgans (9).

5. Elektrisches Gerät nach einem der Ansprüche 1 bis 4, **dadurch gekennzeichnet , dass** das Lagerelement (10) einstückig mit der Montageplatte (5) ausgebildet ist.

6. Elektrisches Gerät nach einem der Ansprüche 1 bis 5, **dadurch gekennzeichnet , dass** die Montageplatte (5) einstückig mit einer Gehäusegrundplatte (17) ausgebildet ist.

7. Elektrisches Gerät nach einem der Ansprüche 1 bis 6, **dadurch gekennzeichnet , dass** an die Montageplatte (5) einstückig ein Gehäusebefestigungselement (15) angeformt ist.

8. Elektrisches Gerät nach einem der Ansprüche 1 bis 7, **dadurch gekennzeichnet , dass** die Montageplatte (5) einstückig mit einem Gehäusegrundkörper (21) ausgebildet ist.

## Claims

1. Electrical device (1) comprising an electric motor with a motor housing (4) and a reverse preventing mechanism (3), said reverse preventing mechanism (3) having an eccentric element (7) rotating with the motor shaft (6) and a positively-driven locking component (9) essentially encircling said eccentric element, **characterised in that** a bearing element (10) is provided, which is arranged outside of the motor housing (4) on or in one of the neighbouring mounting plates (5), to provide axial guidance of the locking component (9) without any displacement and radial guidance thereof with displacement.

2. Electrical device according to claim 1, **characterised in that** a driving pinion (8) is arranged on the motor shaft (6) on the side of the mounting plate (5) facing away from the motor.

3. Electrical device according to claim 2, **characterised in that** the eccentric element (7) and the driving pinion (8) are designed in one piece.

4. Electrical device according to claims 2 or 3, **characterised in that** the external diameter (Dₐ) of the driving pinion (8) is smaller than the internal diameter (Dᵢ) of the locking component (9).

5. Electrical device according to one of claims 1 to 4, **characterised in that** the bearing element (10) and the mounting plate (5) are designed in one piece.

6. Electrical device according to one of claims 1 to 5, **characterised in that** the mounting plate (5) and a housing base plate (17) are designed in one piece.

7. Electrical device according to one of claims 1 to 6, **characterised in that** a housing securing element (15) is designed to form a prominent piece of the mounting plate.

8. Electrical device according to one of claims 1 to 7, **characterised in that** the mounting plate (5) and a housing base body (21) are designed in one piece.

## Revendications

1. Appareil électrique (1) comprenant un moteur électrique comportant un carter moteur (4) et un système de blocage anti-retour (3), qui comporte un élément excentrique (7) en rotation avec l'arbre moteur (6) ainsi qu'un organe de blocage (9) à guidage forcé entourant l'élément excentrique sensiblement de manière annulaire, **caractérisé en ce que** pour assurer le guidage axialement non coulissant et radialement coulissant de l'organe de blocage (9), il est prévu un élément de palier (10) qui est agencé à l'extérieur du carter moteur (4) sur ou dans une plaque de montage (5) voisine de ce dernier.

2. Appareil électrique selon la revendication 1, **caractérisé en ce que** sur le côté de la plaque de montage (5), qui est éloigné du moteur, un pignon d'entraînement (8) est agencé sur l'arbre moteur (6).

3. Appareil électrique selon la revendication 2, **caractérisé en ce que** l'élément excentrique (7) est réalisé d'un seul tenant avec le pignon d'entraînement (8).

4. Appareil électrique selon la revendication 2 ou 3, **caractérisé en ce que** le diamètre extérieur (Dₐ) du pignon d'entraînement (8) est inférieur au diamètre intérieur (Dᵢ) de l'organe de blocage (9).

5. Appareil électrique selon l'une des revendications 1 à 4, **caractérisé en ce que** l'élément de palier (10) est réalisé d'un seul tenant avec la plaque de montage (5).

6. Appareil électrique selon l'une des revendications 1 à 5, **caractérisé en ce que** la plaque de montage (5) est réalisée d'un seul tenant avec une plaque de base de carter (17).

7. Appareil électrique selon l'une des revendications 1 à 6, **caractérisé en ce que** sur la plaque de montage (5) est formé d'un seul tenant, un élément de fixation de carter (15).

8. Appareil électrique selon l'une des revendications 1 à 7, **caractérisé en ce que** la plaque de montage (5) est réalisée d'un seul tenant avec un corps de base de carter (21).
